# EUROPEAN PATENT SPECIFICATION

(11) **EP 2 957 764 B1**
(45) Date of publication and mention of the grant of the patent: **08.08.2018**
(21) Application number: 14172474.0
(22) Date of filing: 16.06.2014
(51) Int. Cl.: F03B 17/06

(54) **Hydraulic power generation device**
Hydraulische Stromerzeugungsvorrichtung
Dispositif de génération d'énergie hydraulique

(43) Date of publication of application: 23.12.2015
(73) Proprietor: Chen, Shui-Chuan, Tainan City (TW)
(72) Inventor: Chen, Shui-Chuan, Tainan City (TW)
(74) Representative: Jeannet, Olivier

(56) References cited:
- EP-A1- 2 434 139
- GB-A- 191 226 348
- JP-A- 2012 145 090
- US-A- 5 420 463
- US-A1- 2010 066 092
- US-A1- 2013 001 949

## Description

### BACKGROUND OF THE INVENTION

### 1. Fields of the invention

The present invention relates to a hydraulic power generation device, and more particularly, to a hydraulic power generation device which comprises multiple water passage units which are able to be maintained individually.

### 2. Descriptions of Related Art

The conventional hydraulic power generation device, like the one shown in US 2010/066092 A1, JP2012145090 A or US 2013/001949 A1, is built in those areas with plenty of water and generally comprises water passages with a high end and a low end, multiple water turbines are located above the water passages so as to be driven by the water to generate mechanical energy. An electric power generation unit is connected to and driven by each of the water turbines to transform the mechanical energy into electric energy. However, when one of the mills or the electric power generation unit needs to be maintained, in order to keep the water away from the water turbine or the electric power generation unit to avoid dangerous result, the operation of the whole hydraulic power generation device has to be stopped until the maintenance is finished. The conventional way of maintenance reduces the efficiency of the hydraulic power generation device. Frequent switching on and off will also shorten the life of use of the hydraulic power generation device.

The present invention intends to provide a hydraulic power generation device which eliminates the shortcomings mentioned above.

### SUMMARY OF THE INVENTION

The present invention relates to a hydraulic power generation device and comprises a water passage unit which has a high end and a low end, and multiple water turbines are located above the water passage unit. Multiple containers are located beneath the water passage unit and located corresponding to the water turbines respectively. The water passage unit has an inlet and an outlet located corresponding to each of the containers. The inlet and the outlet communicate with the room of the container corresponding thereto. Each of the inlet and the outlet is sealed by a seal. Each water turbine is connected with an electric power generator and an electric power storage unit is connected with the electric power generators.

When one of the water turbines or the electric power generator needs to be maintained, the seal of the inlet is opened and the water flows to the water passage unit via the outlet to drive the water turbines behind the damaged water turbine. The hydraulic power generation device is still under operation while one of the water turbines is under maintenance.

The primary object of the present invention is to provide a hydraulic power generation device which does not need to stop the operation of the hydraulic power generation device while one of the water turbines or the electric power generator needs to be repaired.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a cross sectional view of the hydraulic power generation device of the present invention;
Fig. 2 shows the water passage and the water turbines of the hydraulic power generation device of the present invention;
Fig. 3 shows the operation status of the water passage and the water turbines of the hydraulic power generation device of the present invention, and;
Fig. 4 is a cross sectional view of another embodiment of the hydraulic power generation device of the present invention.

### DETAILED DESCRIPTION OF THE PREFERRED EMBODIMENT

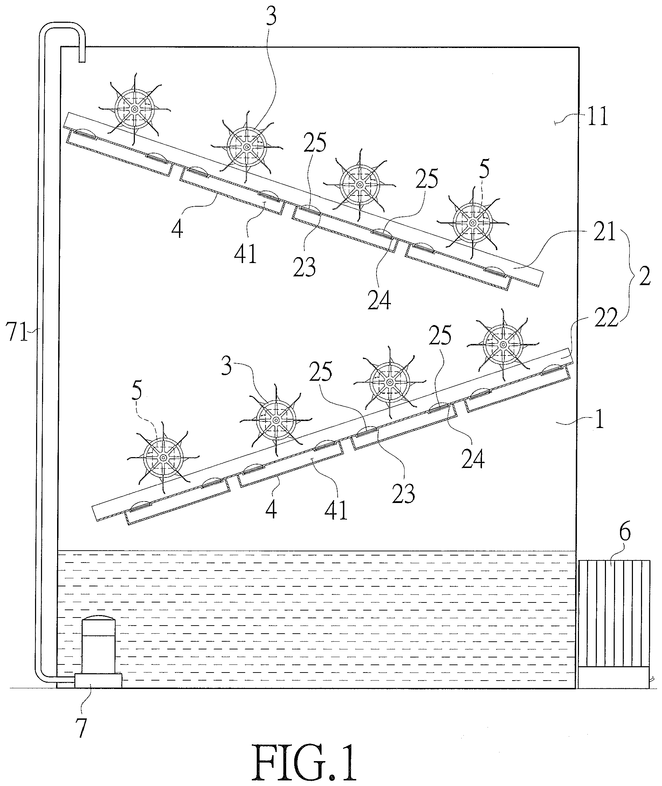

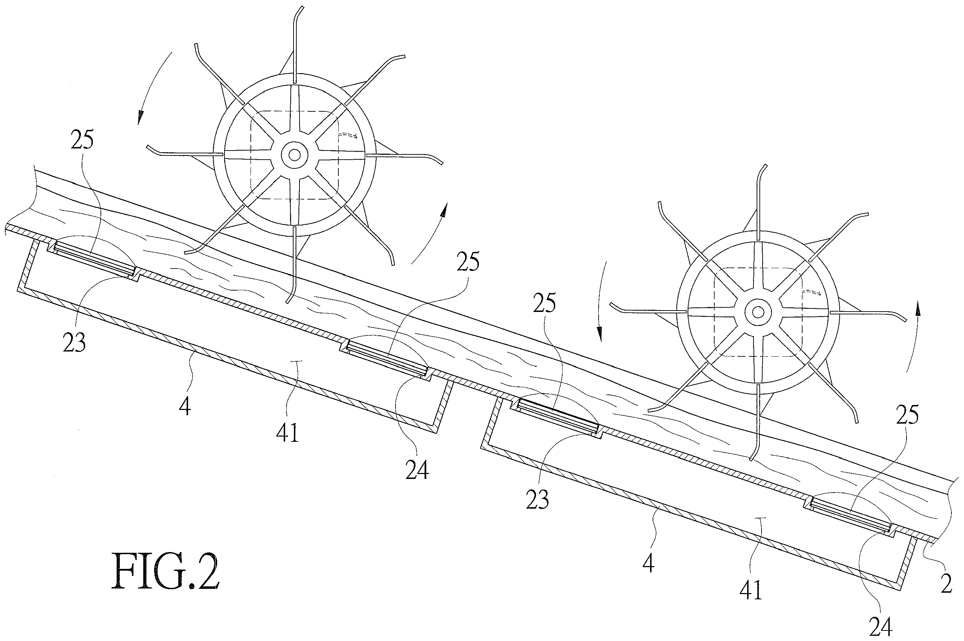

Referring to Figs. 1 and 2, the hydraulic power generation device of the present invention comprises a case 1 which has a space 11 defined therein and a water passage unit 2 is located in the space 11. In this embodiment, there are at least two water passage units 2, and each water passage unit 2 has a high end and a low end. Taken one of the two water passage units 2 as an example to be described, the water passage unit 2 comprises a first passage 21 and a second water passage 22 which is located below the first passage 21. The first passage 21 is an inclined passage and has a low end and a high end, and the second passage 22 is an inclined passage and has a low end and a high end. The low end of the first passage 21 is located corresponding to the high end of the second passage 22. The first and second passages 21, 22 are inclined toward different directions.

Multiple water turbines 3 are located above the water passage unit 2, and a portion of each water turbine 3 is located within the water passage unit 2 so that the water rotates the blades of the water turbine 3. Multiple containers 4 are located beneath the water passage unit 2 and located corresponding to the water turbines 3 respectively. Each container 4 has a room 41 defined therein. The water passage unit 2 has an inlet 23 and an outlet 24 located corresponding to each of the containers 4. Each of the water turbines 3 is located between the inlet 23 and the outlet 24 of the container 4 corresponding to the water turbine 3. The inlet 23 and the outlet 24 communicate with the room 41 of the container 4 corresponding thereto. Each of the inlets 23 and the outlets 24 has a seal 25 connected thereto. Each water turbine 3 is connected with an electric power generator 5 which is connected with an electric power storage unit 6. The electric power generator 5 and the electric power storage unit 6 are located outside of the case 1. A pump 7 is located in the space 11 of the case 1. The pump 7 is connected to a first end of a pipe 71, a second end of the pipe 71 extends to a first opening 121 of the case 1 and is located high end of the water passage unit 2.

The space 11 is filled a certain height of water and the water level is higher than the pump 7. When the pump 7 is activated, the water in the space 11 is pumped to the upper portion of the space 11 via the pipe 71, and the water flows to the high end of the first passage 21. The water then flows downward along the first passage 21 and toward the low end of the first passage 21. The water flows to the high end of the second passage 22 via the low end of the first passage 21, and the water flows downward along the second passage 22 and toward the low end of the second passage 22. The water flows downward along the third passage, the fourth passage (if available) and so on. The water flows back to the initial water level in the case 1. The water is again pumped by the pump 7 to go through the cycle mentioned again.

When the water flows downward, the water turbines 3 are driven and rotated so as to activate the electric power generators 5 that are connected with the water turbines 3 so as to generate electric power which is transported to the electric power storage unit 6.

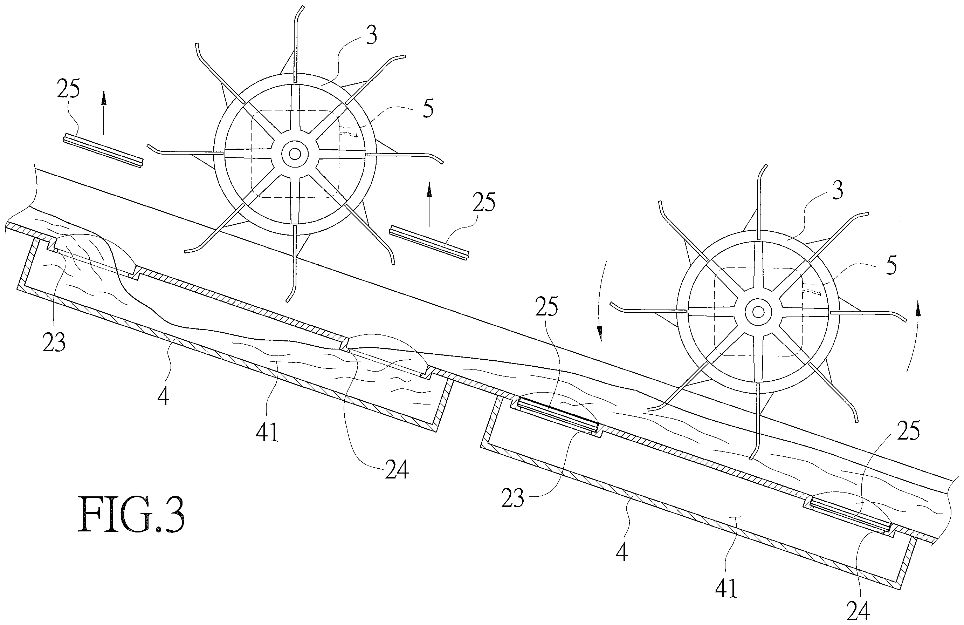

As shown in Fig. 3 when one of the water turbines 3 or the electric power generators 5 needs to be repaired or maintained, the seals 25 of the inlet 23 and the outlet 24 of the container 4 correspondent to the damaged water turbine 3 or the electric power generator 5 are opened. The water enters into the inlet 23 and the room 41 of the container 4, and flows out from the outlet 24 and back to the water passage unit 2 to continuously drive the rest of the water turbines 3. Therefore, the technician can access the damaged water turbine 3 or the electric power generator 5 while the hydraulic power generation device is still in operation. It is noted that the hydraulic power generation device does not need to be shut off while maintaining the damaged water turbine 3 or the electric power generator 5.

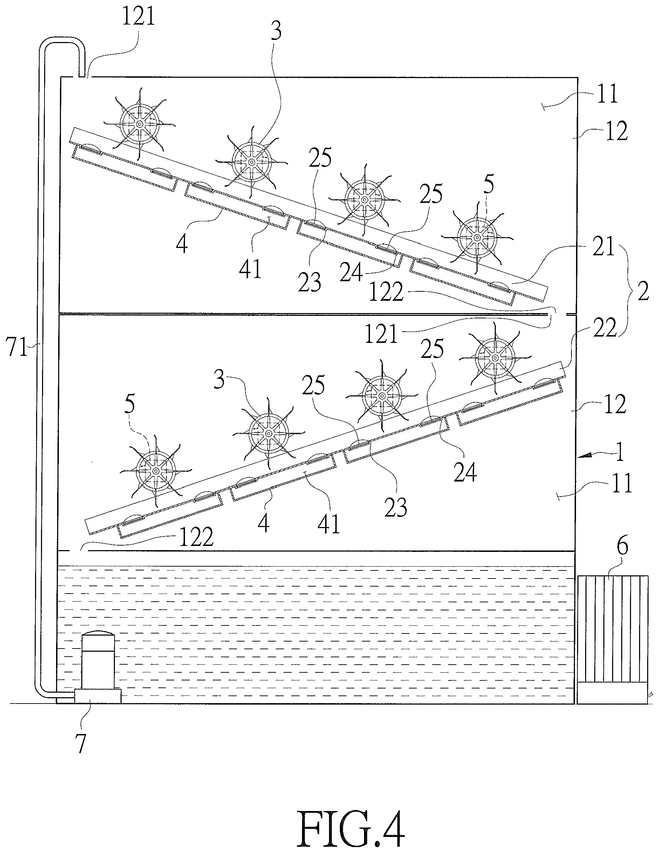

As shown in Fig. 4 which shows another embodiment of the present invention, wherein the case 1 comprises multiple boxes 12 which are overlapped with each other. Each box 12 has a space 11 defined therein. The space 11 of each of the boxes 12 has the water passage unit 2 and the multiple water turbines 3 received therein. The electric power generators 5 connected to the water turbines 3 are located outside of each of the boxes 12. The first and second passages 21, 22 are inclined toward different directions. Each box 12 has a first opening 121 and a second opening 122, the first opening 121 is located corresponding to the high end of the water passage unit 2, and the second opening 122 is located corresponding to the low end of the water passage unit 2. A pump 7 is located in the space 11 of the case 1 that is located at the lowest position of the overlapped boxes 12 in the case 1. The lowest box 12 has an open area in the top thereof. When in use, the water enters into the top box 12 via the first opening 121 of the top box 12, and the water flows downward along the water passage unit 2 and out from the second opening 122. The water then flows into the second box 12 via the first opening 121 of the second box 12. The water flows through the multiple overlapped boxes 12 and drives the water turbines 3 to generate electric power. It is noted that number of the box 12 can be increased or decreased according to practical needs.

## Claims

1. A hydraulic power generation device comprising:
- a water passage unit (2) having, with respect to the ground, a high end and a low end,
- multiple water turbines (3) located, with respect to the ground, above the water passage unit (2), a portion of each water turbine (3) being located within the water passage unit (2) so that the water rotates the blades of the water turbine (3),
- each water turbine (3) being connected with an electric power generator (5) which is connected with an electric power storage unit (6);
**characterized in that**:
- the hydraulic power generation device further comprises multiple containers (4) located, with respect to the ground, beneath the water passage unit (2), and located corresponding to the water turbines (3) respectively, each container (4) having a room (41) defined therein;
- the water passage unit (2) having an inlet (23) and an outlet (24) located corresponding to each of the containers (4), such that each of the water turbines (3) is located between the inlet (23) and the outlet (24), the inlet (23) and the outlet (24) communicating with the room (41) of the container (4) corresponding thereto, each of the inlet (23) and the outlet (24) having a seal (25) connected thereto, , the seals (25) of the inlet (23) and the outlet (24) being openable such that, when opened, the water enters into the inlet (23) and the room (41) of the container (4), and flows out from the outlet (24) and back to the water passage unit (2).

2. The device as claimed in claim 1, wherein the water passage unit (2) at least comprises a first passage (21) and a second water passage (22) which is located below the first passage (21), the first passage (21) is an inclined passage and has a low end and a high end, the second passage (22) is an inclined passage and has a low end and a high end, the low end of the first passage (21) is located corresponding to the high end of the second passage (22), the first and second passages (21, 22) are inclined toward different directions.

3. The device as claimed in claim 2, wherein a case (1) has a space (11) defined therein and the water passage unit (2) is located in the space (11), the electric power generator (5) and the electric power storage unit 6 are located outside of the case (1).

4. The device as claimed in claim 3, wherein the case (1) comprises multiple boxes (12) which are overlapped with each other, each box (12) has a space (11) defined therein, the space (11) of each of the boxes (12) has the water passage unit (2) and the multiple water turbines (3) received therein, the electric power generators (5) connected to the water turbines (3) are located outside of each of the boxes (12), each box (12) has a first opening (121) and a second opening (122), the first opening (121) is located corresponding to the high end of the water passage unit (2), the second opening (122) is located corresponding to the low end of the water passage unit (2).

5. The device as claimed in claim 4, wherein the first water passage (21) and the second passage (22) are respectively located in each two adjacent boxes (12).

6. The device as claimed in claim 5, wherein a pump (7) is located in the space (11) of the case (1) that is located at the lowest position of the overlapped boxes (12) in the case (1), the lowest box (12) has an open area in a top thereof, the pump (7) is connected to a first end of a pipe (71), a second end of the pipe (71) extends to the first opening of the box (12) located at the top of the overlapped boxes (12).

7. The device as claimed in claim 1, wherein a case (1) has a space (11) defined therein and the water passage unit (2) is located in the space (11), the electric power generator (5) and the electric power storage unit (6) are located outside of the case (1).

8. The device as claimed in claim 7, wherein the case (1) comprises multiple boxes (12) which are overlapped with each other, each box (12) has a space (11) defined therein, the space (11) of each of the boxes (12) has the water passage unit (2) and the multiple water turbines (3) received therein, the electric power generators (5) connected to the water turbines (3) are located outside of each of the boxes (12), each box (12) has a first opening (121) and a second opening (122), the first opening (121) is located corresponding to the high end of the water passage unit (2), the second opening (122) is located corresponding to the low end of the water passage unit (2).

9. The device as claimed in claim 8, wherein a pump (7) is located in the space (11) of the case (1) that is located at the lowest position of the overlapped boxes (12) in the case (1), the lowest box (12) has an open area in a top thereof, the pump (7) is connected to a first end of a pipe (71), a second end of the pipe (71) extends to the first opening of the box (12) located at the top of the overlapped boxes (12).

10. The device as claimed in claim 7, wherein a pump (7) is located in the space (11) of the case (1), the pump (7) is connected to a first end of a pipe (71), the case (1) has a first opening (121) defined in a top thereof, a second end of the pipe (71) extends to the first opening (121) of the case (1) and located high end of the water passage unit (2).

## Patentansprüche

1. Vorrichtung zur Erzeugung einer hydraulischen Kraft, aufweisend:
- eine Wasserdurchlasseinheit (2), die in Bezug auf den Boden ein oberes Ende und ein unteres Ende aufweist,
- mehrere Wasserturbinen (3), die sich in Bezug auf den Boden oberhalb der Wasserdurchlasseinheit (2) befindet, wobei ein Teil jeder Wasserturbine (3) innerhalb der Wasserdurchlasseinheit (2) angeordnet ist, so dass das Wasser die Schaufeln der Wasserturbine (3) dreht,
- wobei jede Wasserturbine (3) mit einem Stromgenerator (5) verbunden ist, welches wieder mit einer Stromspeichereinheit (6) verbunden ist;
**dadurch gekennzeichnet:**
- **dass** die Vorrichtung zur Erzeugung einer hydraulischen Kraft ferner mehrere Behälter (4) aufweist, die in Bezug auf den Boden unter der Wasserdurchlasseinheit (2) angeordnet sind und jeweils entsprechend den jeweiligen Wasserturbinen (3) angeordnet sind, und wobei jeder der Behälter (4) mit einem darin begrenzten Raum (41) aufweist;
- **dass** die Wasserdurchgangseinheit (2) einen Einlass (23) und einen Auslass (24) aufweist, die den jeweiligen Behältern (4) zugeordnet sind, so dass sich jede der Wasserturbinen (3) zwischen dem Einlass (23) und dem Auslass (24) befindet, wobei der Einlass (23) und der Auslass (24) mit dem Raum (41) des Behälters (4) kommunizieren, und wobei sowohl der Einlass (23) als auch der Auslass (24) eine Dichtung (25) aufweisen, wobei die Dichtungen (25) des Einlasses (23) und des Auslasses (24) so zu öffnen sind, dass beim Öffnen der Dichtungen (25) das Wasser in den Einlass (23) und den Raum (41) des Behälters (4) eintritt und aus dem Auslass (24) zurück zu der Wasserdurchlasseinheit (2) strömt

2. Vorrichtung nach Anspruch 1, **dadurch gekennzeichnet, dass** die Wasserdurchlasseinheit (2) mindestens einen ersten Wasserkanal (21) und einen zweiten Wasserkanal (22) aufweist, der sich unterhalb des ersten Kanals (21) befindet, wobei der erste Wasserkanal (21) ein geneigter Durchgang ist und ein unteres Ende und ein oberes Ende aufweist, wobei der zweite Wasserkanal (22) ein geneigter Durchgang ist und ein unteres Ende und ein oberes Ende aufweist, wobei das untere Ende des ersten Wasserkanals (21) entsprechend dem oberen Ende des zweiten Wasserkanals (22) angeordnet ist, und wobei der erste und der zweite Wasserkanal (21, 22) in unterschiedlichen Richtungen geneigt sind.

3. Vorrichtung nach Anspruch 2, **dadurch gekennzeichnet, dass** ein Gehäuse (1) einen darin begrenzten Raum (11) aufweist und die Wasserdurchlasseinheit (2) in dem Raum (11) angeordnet ist, wobei der Stromgenerator (5) und die Stromspeichereinheit (6) außerhalb des Gehäuses (1) angeordnet sind.

4. Vorrichtung nach Anspruch 3, **dadurch gekennzeichnet, dass** das Gehäuse (1) mehrere Kästen (12) aufweist, die einander überlappen, wobei jeder der Kästen (12) einen darin begrenzten Raum (11) aufweist, in dem sich die Wasserdurchlasseinheit (2) und die Wasserturbinen (3) befinden, und wobei die an die Wasserturbinen (3) angeschlossenen Stromgeneratoren (5) außerhalb jeder der Kästen (12) angeordnet sind, und wobei jeder der Kästen (12) eine erste Öffnung (121) und eine zweite Öffnung (122) besitzt, wobei die erste Öffnung (121) entsprechend dem oberen Ende der Wasserdurchlasseinheit (2) angeordnet ist, und wobei die zweite Öffnung (122) entsprechend dem unteren Ende der Wasserdurchlasseinheit (2) angeordnet ist.

5. Vorrichtung nach Anspruch 4, **dadurch gekennzeichnet**, wobei sich der erste Wasserkanal (21) und der zweite Wasserkanal (22) in den jeweiligen benachbarten Kästen (12) befinden.

6. Vorrichtung nach Anspruch 5, **dadurch gekennzeichnet, dass** eine Pumpe (7) in dem Raum (11) des Gehäuses (1) angeordnet ist und sich an der untersten Position der überlappten Kästen (12) des Gehäuses (1) befindet, wobei der unterste Kasten (12) oben eine offene Fläche hat, und wobei die Pumpe (7) mit einem ersten Ende einer Rohrleitung (71) verbunden ist, und wobei sich ein zweites Ende der Rohrleitung (71) zu der ersten Öffnung des Kastens (12) erstreckt, die sich an der Oberseite der überlappenden Kästen (12) befindet.

7. Vorrichtung nach Anspruch 1, **dadurch gekennzeichnet, dass** ein Gehäuse (1) einen darin begrenzten Raum (11) aufweist und die Wasserdurchlasseinheit (2) in dem Raum (11) angeordnet ist, wobei sich der Stromgenerator (5) und die Stromspeichereinheit (6) außerhalb des Gehäuses (1) befinden.

8. Vorrichtung nach Anspruch 7, **dadurch gekennzeichnet, dass** das Gehäuse (1) mehrere Kästen (12) aufweist, die einander überlappen, wobei jeder der Kästen (12) einen darin begrenzten Raum (11) aufweist, in dem sich die Wasserdurchlasseinheit (2) und die Wasserturbinen (3) befinden, und wobei sich die an die Wasserturbinen (3) angeschlossenen Stromgeneratoren (5) außerhalb jeder der Kästen (12) befinden, wobei jede der Kästen (12) eine erste Öffnung (121) und eine zweite Öffnung (122) aufweist, wobei sich die erste Öffnung (121) entsprechend dem oberen Ende der Wasserdurchlasseinheit (2) angeordnet ist, während die zweite Öffnung (122) entsprechend dem unteren Ende der Wasserdurchlasseinheit (2) angeordnet ist.

9. Vorrichtung nach Anspruch 8, **dadurch gekennzeichnet, dass** eine Pumpe (7) in dem Raum (11) des Gehäuses (1) angeordnet ist und sich an der untersten Position der überlappten Kästen (12) des Gehäuses (1) befindet, wobei der unterste Kasten (12) oben eine offene Fläche hat, und wobei die Pumpe (7) mit einem ersten Ende einer Rohrleitung (71) verbunden ist, und wobei sich ein zweites Ende der Rohrleitung (71) zu der ersten Öffnung des Kastens (12) erstreckt, die sich an der Oberseite der überlappenden Kästen (12) befindet.

10. Vorrichtung nach Anspruch 7, **dadurch gekennzeichnet, dass** eine Pumpe (7) in dem Raum (11) des Gehäuses (1) angeordnet ist, wobei die Pumpe (7) mit einem ersten Ende einer Rohrleitung (71) verbunden ist, und wobei das Gehäuse (1) oben eine erste Öffnung (121) aufweist, und wobei sich ein zweites Ende der Rohrleitung (71) zu der ersten Öffnung (121) des Gehäuses (1) erstreckt und sich an der Oberseite der Wasserdurchlasseinheit (2) befindet.

## Revendications

1. Un dispositif hydraulique de génération d'énergie comprenant :
- une unité (2) de passage d'eau ayant, par rapport au sol, une extrémité haute et une extrémité basse,
- de multiples turbines à eau (3) situées, par rapport au sol, au-dessus de l'unité (2) de passage d'eau, une partie de chaque turbine à eau (3) étant située à l'intérieur de l'unité (2) de passage d'eau de sorte que l'eau fait tourner les aubes de la turbine à eau (3),
- chaque turbine à eau (3) étant reliée à un générateur (5) d'énergie électrique qui est relié à une unité (6) de stockage d'énergie électrique ;
**caractérisé en ce que** :
- le dispositif hydraulique de génération d'énergie comprend en outre plusieurs conteneurs (4) situés, par rapport au sol, en dessous de l'unité (2) de passage d'eau et situés en correspondance des turbines à eau (3) respectivement, chaque conteneur (4) ayant un espace (41) défini à l'intérieur de lui ;
- l'unité (2) de passage d'eau ayant une entrée (23) et une sortie (24) situées en correspondance de chacun des conteneurs (4), de sorte que chacune des turbines à eau (3) soit située entre l'entrée (23) et le la sortie (24), l'entrée (23) et la sortie (24) communiquant avec l'espace (41) du récipient (4) qui lui correspond, chacune des entrées (23) et des sorties (24) ayant un joint d'étanchéité (25) relié à elle, les joints (25) de l'entrée (23) et de la sortie (24) étant apte à s'ouvrir de sorte que, lorsqu'ils sont ouverts, l'eau pénètre dans l'entrée (23) et dans l'espace (41) du conteneur (4) et s'écoule depuis la sortie (24) et retourne à l'unité (2) de passage d'eau.

2. Le dispositif selon la revendication 1, dans lequel l'unité (2) de passage d'eau comprend au moins un premier passage (21) et un deuxième passage d'eau (22) qui est situé en dessous du premier passage (21), le premier passage (21) est un passage incliné et a une extrémité basse et une extrémité haute, le deuxième passage (22) est un passage incliné et a une extrémité basse et une extrémité haute, l'extrémité basse du premier passage (21) est située en correspondance de l'extrémité haute du deuxième passage (22), les premier et deuxième passages (21, 22) sont inclinés vers des directions différentes.

3. Le dispositif selon la revendication 2, dans lequel un boîtier (1) présente un espace (11) défini à l'intérieur de lui et l'unité (2) de passage d'eau est située dans l'espace (11), le générateur (5) d'énergie électrique et l'unité (6) de stockage d'énergie électrique sont situés à l'extérieur du boîtier (1).

4. Le dispositif selon la revendication 3, dans lequel le boîtier (1) comprend plusieurs boîtes (12) qui se chevauchent l'une l'autre, chaque boîte (12) a un espace (11) défini à l'intérieur d'elle, l'espace (11) de chaque des boîtes (12) a l'unité (2) de passage d'eau et les multiples turbines à eau (3) reçues à l'intérieur d'elle, les générateurs d'énergie électrique (5) reliés aux turbines à eau (3) sont situés à l'extérieur de chacune des boîtes (12), chaque boîte (12) présente une première ouverture (121) et une deuxième ouverture (122), la première ouverture (121) est située en correspondance de l'extrémité haute de l'unité (2) de passage d'eau, la deuxième ouverture (122) est située en correspondance de l'extrémité inférieure de l'unité (2) de passage d'eau.

5. Le dispositif selon la revendication 4, dans lequel le premier passage d'eau (21) et le deuxième passage (22) sont chacun situés dans chacune des deux boîtes adjacentes (12).

6. Le dispositif selon la revendication 5, dans lequel une pompe (7) est située dans l'espace (11) du boîtier (1) qui est situé à la position la plus basse des boîtiers (12) en chevauchement dans le boîtier (1), la boîte inférieure (12) a une zone ouverte dans sa partie supérieure, la pompe (7) est reliée à une première extrémité d'une conduite (71), une deuxième extrémité de la conduite (71) s'étend jusqu'à la première ouverture de la boîte (12) située en haut des boîtes (12) en chevauchement.

7. Le dispositif selon la revendication 1, dans lequel un boîtier (1) a un espace (11) défini à l'intérieur de lui et l'unité (2) de passage d'eau est située dans l'espace (11), le générateur (5) d'énergie électrique et l'unité (6) de stockage d'énergie électrique est située à l'extérieur du boîtier (1).

8. Le dispositif selon la revendication 7, dans lequel le boîtier (1) comprend plusieurs boîtes (12) qui se chevauchent l'une l'autre, chaque boîte (12) a un espace (11) défini à l'intérieur d'elle, l'espace (11) de chacune des boîtes (12) a l'unité (2) de passage d'eau et les multiples turbines à eau (3) reçues à l'intérieur de lui, les générateurs d'énergie électrique (5) reliés aux turbines à eau (3) sont situés à l'extérieur de chacune des boîtes (12), chaque boîte (12) comporte une première ouverture (121) et une deuxième ouverture (122), la première ouverture (121) est située en correspondance de l'extrémité haute de l'unité (2) de passage d'eau, la deuxième ouverture (122) est située en correspondance de l'extrémité inférieure de l'unité (2) de passage d'eau.

9. Le dispositif selon la revendication 8, dans lequel une pompe (7) est située dans l'espace (11) du boîtier (1) qui est situé dans la position la plus basse des boîtiers (12) en chevauchement dans le boîtier (1), la boîte inférieure (12) a une zone ouverte dans sa partie supérieure, la pompe (7) est reliée à une première extrémité d'une conduite (71), une deuxième extrémité de la conduite (71) s'étend jusqu'à la première ouverture de la boîte (12) située en haut des boîtes (12) en chevauchement.

10. Le dispositif selon la revendication 7, dans lequel une pompe (7) est située dans l'espace (11) du boîtier (1), la pompe (7) est reliée à une première extrémité d'une conduite (71), le boîtier (1) présente une première ouverture (121) définie dans sa partie supérieure, une deuxième extrémité du tube (71) s'étend jusqu'à la première ouverture (121) du boîtier (1) et située à l'extrémité supérieure de l'unité (2) de passage d'eau.
